# EUROPÄISCHE PATENTANMELDUNG

(11) **EP 4 631 655 A2**
(43) Veröffentlichungstag der Anmeldung: **15.10.2025**
(21) Anmeldenummer: 25167161.6
(22) Anmeldetag: 28.03.2025
(51) Int. Cl.: B23B 31/40

(54) **SPANNSTÖSSEL UND VERFAHREN ZUR HERSTELLUNG EINES SPANNSTÖSSELS**

(30) Priorität: 11.04.2024 DE 102024110182
(71) Anmelder: Adelbert Haas GmbH, 78647 Trossingen (DE)
(72) Erfinder: Zepf, Timo, 78606 Seitingen-Oberflacht (DE)
(74) Vertreter: Westphal, Mussgnug & Partner Patentanwälte mbB

(57) **Zusammenfassung**

Die Erfindung betrifft einen Spannstößel (10) mit einem Schaft (12) mit einer Längsachse (L), einem ersten Ende (12a) und einem zweiten Ende (12b), wobei an dem zweiten Ende (12b) zwei Arme (20, 30) in Längsrichtung verlaufend und durch einen Spalt (14) beabstandet zueinander angeordnet sind, wobei jeder der Arme (20, 30) eine Innenfläche (21, 31) und eine Außenfläche (22, 32) aufweist, und wobei an einem freien Ende (20a, 30a) der Arme (20, 30) jeweils auf der Außenfläche (22, 32) eine radiale Verdickung (23, 33) angeordnet ist, wobei zwischen den beiden Armen (20, 30) ein Keilblech (40) in Längsrichtung verschiebbar angeordnet ist, wobei in einer zurückgezogenen Position des Keilblechs (40) die Arme (20, 30) in einem zusammengedrückten Zustand und in einer vorgeschobenen Position des Keilblechs (40) die Arme (20, 30) in einem gespreizten Zustand angeordnet sind, wobei jede der beiden radialen Verdickungen (23, 33) eine Anlagefläche (24, 34) aufweist, welche im gespreizten Zustand jeweils Teil einer um die Längsachse (L) rotationssymmetrischen gedachten Fläche sind. sowie ein Verfahren zur Herstellung eines Spannstößels (10).

## Beschreibung

Werkzeugmaschinen werden in immer weitergehendem Maße automatisiert betrieben. Dies bringt insbesondere mit sich, dass auch der Werkzeugwechsel beim Betrieb einer solchen Werkzeugmaschine teil- oder vollautomatisiert durchgeführt wird. Dabei ist es gängige Praxis, die verschiedenen Werkzeuge über eine Werkzeugaufnahme mit einer Spindel, einer Rotationsachse oder eines sonstigen Teilapparats der Werkzeugmaschine zu verbinden.

Es gibt auch Fälle, bei denen das zu bearbeitende Werkstück mit der Spindel, der Rotationsachse oder dem Teilapparat gekoppelt wird. Um dies zu verdeutlichen, wird im Folgenden der Begriff "Werkzeug- oder Werkstückaufnahme" verwendet, obwohl eigentlich jede Werkzeugaufnahme grundsätzlich auch eine Werkstückaufnahme ist bzw. zu einer Werkstückaufnahme wird, wenn das Spannmittel, in das bestimmungsgemäß bei einer Werkzeugaufnahme das Werkzeug aufgenommen wird, zum Halten eines Werkstücks verwendet wird.

Bekannt ist es, Werkzeuge oder Werkstücke, welche ein axiales Loch aufweisen, mittels eines Spannstößels, welcher insbesondere einen langgestreckten zylindrischen Schaft mit einer radialen Verdickung, welche beispielsweise konisch, konvex oder auch zylinderförmig ausgeführt sein kann, an einem Ende aufweist, in der Werkzeug- oder Werkstückaufnahme zu befestigen. Dazu wird der Spannstößel durch das Loch geführt und der zylindrische Schaft des Spannstößels in einem Spannfutter der Werkzeug- oder Werkstückaufnahme gefasst und in axialer Richtung derart weit eingezogen, dass das Werkzeug oder Werkstück an einer Stirnseite der Werkzeug- oder Werkstückaufnahme anliegt und zwischen der Stirnseite der Werkzeug- oder Werkstückaufnahme und der Verdickung des Spannstößels gespannt gehalten ist.

Ein Wechsel des Werkzeugs oder Werkstücks ist aufwendig: Entweder muss mit einer separaten Handhabungseinheit das Werkzeug oder Werkstück gehalten werden, während mit einer weiteren Handhabungseinheit der Spannstößel aus dem Loch des Werkzeugs oder Werkstücks herausgezogen werden muss, wozu auf der dem Schaft abgewandten Seite der Verdickung ein Vorsprung angeordnet sein muss, an welchem die Handhabungseinheit den Spannstößel greifen kann. Alternativ muss mit einer Handhabungseinheit das Werkzeug oder Werkstück gemeinsam mit dem Spannstößel aus der Werkzeug- oder Werkstückaufnahme herausgezogen werden, um ein anderes Werkzeug oder Werkstück gemeinsam mit einem anderen Spannstößel wieder einzuführen, wodurch einerseits die Zustellwege und die Zahl der Handhabungsschritte vergrößert werden und andererseits eine größere Zahl an Spannstößels bereitgehalten werden muss.

Daher ist es auch bereits bekannt, einen ausgehend vom die Verdickung aufweisenden Ende des Spannstößels in axialer Richtung geteilten Spannstößel in dem Spannfutter der Werkzeug- oder Werkstückaufnahme zu fixieren. Der geteilte Spannstößel ist derart ausgebildet, dass die beiden Arme des Spannstößels in einem zusammengedrückten Zustand einen derartigen Außendurchmesser aufweisen, dass die Verdickung durch das Loch des Werkzeugs oder Werkstücks geführt werden kann. Anschließend werden die beiden Arme beispielsweise durch ein Keilblech auseinandergespreizt, so dass der Außendurchmesser der Verdickung derart vergrößert wird, dass das Werkzeug oder Werkstück zwischen der Verdickung und der Stirnseite der Werkzeug- oder Werkstückaufnahme klemmend fixiert werden kann. Bei einem derartigen geteilten Spannstößel kann das Werkzeug oder Werkstück, wenn der geteilte Spannstößel im zusammengedrückten Zustand angeordnet ist, auf den Spannstößel aufgesetzt werden ohne dass der Spannstößel aus dem Spannfutter entfernt werden muss. Nachteilig bei den bekannten geteilten Spannstößeln ist, dass diese, da die Fertigung im zusammengedrückten Zustand mit nachfolgendem Aufspreizen der Arme erfolgt, nach dem Aufspreizen lediglich punktuell an der Innenfläche des Lochs anliegen. Dadurch ergeben sich große Toleranzen, die sich in Fertigungsungenauigkeiten niederschlagen.

Die Aufgabe der Erfindung besteht daher darin, einen Spannstö-ßel bereitzustellen, mit welchem die Genauigkeit der Positionierung eines Werkzeugs oder Werkstücks in der Werkzeug- oder Werkstückaufnahme verbessert werden kann. Weiterhin soll ein Verfahren zur Herstellung eines Spannstößels angegeben werden, mit welchem ein Spannstößel gefertigt werden kann, der eine Positionierung eines Werkzeugs oder Werkstücks in der Werkzeug- oder Werkstückaufnahme mit verbesserter Genauigkeit ermöglichen kann.

Die Aufgabe wird erfindungsgemäß gelöst durch einen Spannstößel mit den Merkmalen des Patentanspruchs 1 sowie ein Verfahren zur Herstellung eines Spannstößels mit den Merkmalen des Patentanspruchs 11.

Vorteilhafte Ausgestaltungen und Weiterbildungen der Erfindung sind in den abhängigen Ansprüchen angegeben.

Der erfindungsgemäße Spannstößel mit einem Schaft mit einer Längsachse, einem ersten Ende und einem zweiten Ende, wobei an dem zweiten Ende zwei Arme in Längsrichtung verlaufend und durch einen Spalt beabstandet zueinander angeordnet sind, wobei jeder der Arme eine Innenfläche und eine Außenfläche aufweist, und wobei an einem freien Ende der Arme jeweils auf der Außenfläche eine radiale Verdickung, welche beispielsweise konisch, konvex oder auch zylinderförmig ausgeführt sein kann, angeordnet ist, wobei zwischen den beiden Armen ein Keilblech relativ zu den beiden Armen in Längsrichtung verschiebbar angeordnet ist, wobei in einer zurückgezogenen Position des Keilblechs die Arme in einem zusammengedrückten Zustand und in einer vorgeschobenen Position des Keilblechs die Arme in einem gespreizten Zustand angeordnet sind, zeichnet sich dadurch aus, dass jede der beiden radialen Verdickungen eine Anlagefläche aufweist, welche im gespreizten Zustand jeweils Teil einer um die Längsachse rotationssymmetrischen gedachten Fläche sind. Eine derartige Ausgestaltung bewirkt, dass die Anlagefläche in einem Loch eines zu befestigenden Werkzeugs oder Werkstücks nicht nur punktuell, sondern zumindest entlang einer linienförmigen Kontaktfläche an der Innenfläche des Lochs anliegt, da die Anlageflächen Teil einer rotationssymmetrischen gedachten Fläche sind, welche in der rotationssymmetrischen Innenfläche des Lochs anliegt.

Es ist möglich, dass das Keilblech verschoben wird, während die Arme feststehen, um die Arme aus dem zusammengedrückten Zustand in den gespreizten Zustand zu überführen. Alternativ kann auch der Spannstößel gegen ein feststehendes Keilblech verschoben werden, um die Arme aus dem zusammengedrückten Zustand in den gespreizten Zustand zu überführen. Wesentlich ist, dass durch eine Relativbewegung zwischen dem Keilblech einerseits und den Armen andererseits ein Wechsel zwischen dem zusammengedrückten Zustand und dem gespreizten Zustand der Arme erfolgen kann.

Gemäß einer besonders bevorzugten Weiterbildung der Erfindung weiten sich die radialen Verdickungen zum freien Ende der Arme hin zumindest über einen axialen Abschnitt konisch auf. Bei Abstimmung des Konuswinkel auf den Winkel einer Senkbohrung des Lochs des zu befestigenden Werkstücks oder Werkzeugs kann dadurch sogar eine flächenförmige Kontaktfläche zwischen dem Spannstößel, insbesondere den Anlageflächen seiner Verdickungen, und dem Loch des zu befestigenden Werkzeugs oder Werkstücks erreicht werden.

Vorzugsweise sind die Anlageflächen gewölbt ausgebildet. Eine derartige Ausgestaltung kann in einer Senkbohrung eines zu befestigenden Werkzeugs oder Werkstücks auch bei unterschiedlichen Neigungen zumindest eine linienförmige Kontaktfläche ermöglichen.

Vorzugsweise ist jede der Außenflächen in wenigstens einem Querschnitt als Kreisbogenabschnitt mit einem Radius R ausgebildet, wobei im gespreizten Zustand die beiden Kreisbogenabschnitte auf einem gedachten Kreis mit dem Radius der Kreisbogenabschnitte dieses Querschnitts um die Längsachse liegen. Mit anderen Worten ist eine die Arme umschreibende Außenkontur im gespreizten Zustand in zumindest einem Querschnitt rund. Durch eine derartige Ausgestaltung kann in einer konusförmigen Senkbohrung eine linienförmige Kontaktfläche ermöglicht werden.

Vorteilhafterweise ist jede der Außenflächen in jedem beliebigen Querschnitt zwischen dem freien Ende der Arme und dem zweiten Ende des Schafts als Kreisbogenabschnitt mit einem Radius R ausgebildet ist, wobei im gespreizten Zustand die beiden Kreisbogenabschnitte auf einem gedachten Kreis mit dem Radius der Kreisbogenabschnitte dieses Querschnitts um die Längsachse liegen. Dabei ist zu beachten, dass der Radius R nicht für jeden Querschnitt identischen Betrag aufweisen muss. Insbesondere ist der Radius R im Bereich der Verdickungen größer als im Bereich außerhalb der Verdickungen.

Mit anderen Worten handelt es sich bei dieser Ausgestaltung um einen Spannstößel, welcher im gespreizten Zustand durch eine rotationssymmetrische Außenkontur umschrieben werden kann.

In einer bevorzugten Ausgestaltung kann jeder der Arme auf seiner Außenseite am dem freien Ende abgewandten Ende eine Hilfsfläche aufweisen. Diese Hilfsflächen sind für den Prozess des Zusammenpressens oder Stauchens der Arme in den zusammengedrückten Zustand von Vorteil. Durch die gezielte Schwächung durch diese Hilfsflächen kann gezielt beeinflusst werden, wie sich die Arme verformen.

Eine bevorzugte Weiterbildung der Erfindung sieht vor, dass das Keilblech lösbar angeordnet ist. Dadurch kann je nach Dicke des zu befestigenden Werkzeugs oder Werkstücks ein Keilblech geeigneter Länge gewählt werden, um einerseits zu verhindern, dass das Keilblech in dem gespreizten Zustand über das Werkzeug oder Werkstück hervorsteht, und andererseits eine gleichmäßige Kraft über die gesamte Dicke des Werkzeugs oder Werkstücks ausüben zu können.

Ein wie zuvor beschriebener Spannstößel kommt vorzugsweise in einem Set mit einem Werkzeug oder Werkstück aufweisend ein Loch mit einem minimalen Innendurchmesser zur Anwendung, wobei im zusammengedrückten Zustand die Arme im Bereich der Verdickungen einen Außendurchmesser aufweisen, welcher kleiner ist als der minimale Innendurchmesser, und wobei im gespreizten Zustand die Arme im Bereich der Verdickungen einen Außendurchmesser aufweisen, welcher größer ist als der minimale Innendurchmesser. Durch diese Ausgestaltung wird ermöglicht, dass im zusammengedrückten Zustand des Spannstößels das Werkzeug oder Werkstück über die die Verdickungen aufweisenden Arme auf den Spannstößel geschoben werden kann. Anschließend kann der Spannstößel in den gespreizten Zustand überführt werden, so dass das Werkzeug oder Werkstück durch die Verdickungen an der Werkzeug- oder Werkstückaufnahme fixiert gehalten werden kann.

Das erfindungsgemäße Verfahren zum Herstellen eines Spannstößels mit einem Schaft mit einer Längsachse, einem ersten Ende und einem zweiten Ende, wobei an dem zweiten Ende zwei Arme in Längsrichtung verlaufend und durch einen Spalt beabstandet zueinander angeordnet sind, wobei jeder der Arme eine Innenfläche und eine Außenfläche aufweist, und wobei an einem freien Ende der Arme jeweils auf der Außenfläche eine radiale Verdickung angeordnet ist, wobei zwischen den beiden Armen ein Keilblech in Längsrichtung verschiebbar angeordnet ist, wobei in einer zurückgezogenen Position des Keilblechs die Arme in einem zusammengedrückten Zustand und in einer vorgeschobenen Position des Keilblechs die Arme in einem gespreizten Zustand angeordnet sind, weist folgende Schritte auf:
- Bereitstellen eines Spannstößelrohlings,
- Herstellen der Außenfläche der Arme sowie der Verdickungen mit den Armen in gespreiztem Zustand,
- Einbringen des Spalts zwischen den Armen und
- Überführen der Arme in den zusammengedrückten Zustand.

Die Erfindung beruht auf der Erkenntnis, dass in dem Fall, dass die Fertigung des Spannstößels in dem Zustand, in dem letztendlich die Anlage an eine Innenkontur eines Lochs eines zu befestigenden Werkzeugs oder Werkstücks erfolgt, also in dem gespreizten Zustand der Arme des Spannstößels, dazu führt, dass eine verbesserte Kontaktfläche bereitgestellt werden kann, da in diesem Fall nicht nur ein annähernd rotationssymmetrischer Körper wie im Falle der Fertigung im zusammengedrückten Zustand und anschließendem Aufspreizen, sondern ein tatsächlich rotationssymmetrischer Körper hergestellt werden kann. Dabei kann das Herstellen der Außenfläche der Arme sowie der Verdickungen insbesondere durch Rundschleifen oder eine Drehmaschinenbearbeitung erfolgen.

Gemäß einer vorteilhaften Weiterbildung der Erfindung erfolgt das Überführen der Arme in den zusammengedrückten Zustand durch Pressen oder Stauchen. Dadurch kann auf einfache Art und Weise ein gezieltes Zusammendrücken der Arme erfolgen.

Vorzugsweise erfolgt das Einbringen des Spalts zwischen den Armen durch Drahterodieren oder durch ein materialabtragendes Verfahren wie Fräsen oder Wasserstrahlschneiden. Dadurch kann der Spalt mit hoher Genauigkeit gefertigt werden.

Vorteilhafterweise werden die Arme gehärtet. Dadurch kann die Stabilität des Spannstößels verbessert werden.

Die Erfindung wird anhand der folgenden Figuren ausführlich erläutert. Es zeigen
- Fig. 1: eine perspektivische Ansicht eines Ausführungsbeispiels eines Spreizdornspannsystems mit einem Basisteil, einem Wechselteil, einem Spannstößel und einem Werkzeug oder Werkstück,
- Fig. 2: einen Längsschnitt durch das Spreizdornspannsystem gemäß Fig. 1,
- Fig. 3: eine teilweise geschnittene perspektivische Ansicht des Spreizdornspannsystems gemäß Fig. 1,
- Fig. 4: eine Ausschnittvergrößerung aus Fig. 3,
- Fig. 5: eine Ausschnittvergrößerung aus Fig. 4,
- Fig. 6: eine vergrößerte perspektivische transparente Darstellung des durch den Spannstößel des Spreizdornspannsystems gemäß Fig. 1 im gespreizten Zustand gehaltenen Werkzeugs oder Werkstücks,
- Fig. 7: eine weitere vergrößerte perspektivische transparente Darstellung des durch den Spannstößel des Spreizdornspannsystems gemäß Fig. 1 im gespreizten Zustand gehaltenen Werkzeugs oder Werkstücks,
- Fig. 8: eine weitere vergrößerte perspektivische transparente Darstellung des durch den Spannstößel des Spreizdornspannsystems gemäß Fig. 1 im gespreizten Zustand gehaltenen Werkzeugs oder Werkstücks,
- Fig. 9: eine Ansicht von vorne auf das durch den Spannstößel des Spreizdornspannsystems gemäß Fig. 1 im gespreizten Zustand gehaltene Werkzeug oder Werkstück,
- Fig. 10: eine perspektivische Ansicht des Spannstößels des Spreizdornspannsystems gemäß Fig. 1 im gespreizten Zustand,
- Fig. 11: eine weitere perspektivische Ansicht des Spannstößels des Spreizdornspannsystems gemäß Fig. 1 im gespreizten Zustand und
- Fig. 12: eine transparente perspektivische Ansicht des Spreizdornspannsystems gemäß Fig. 1 mit dem Spannstößel im zusammengedrückten Zustand.

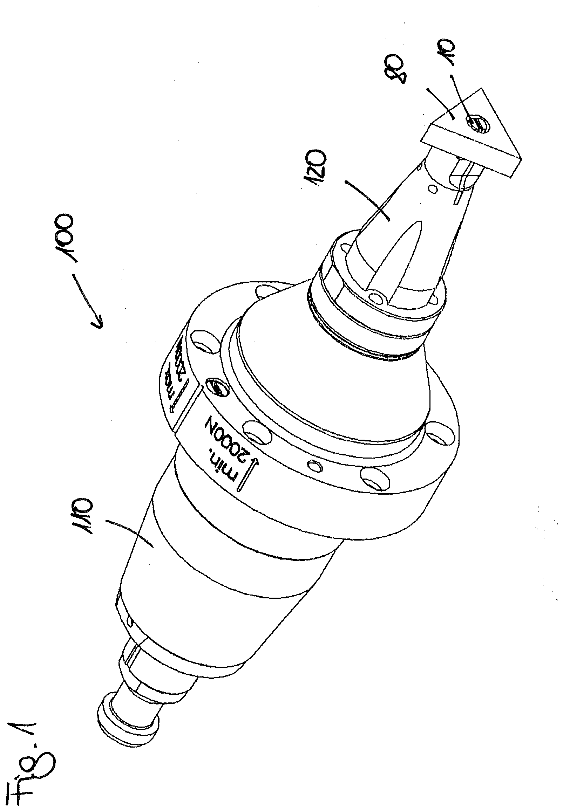

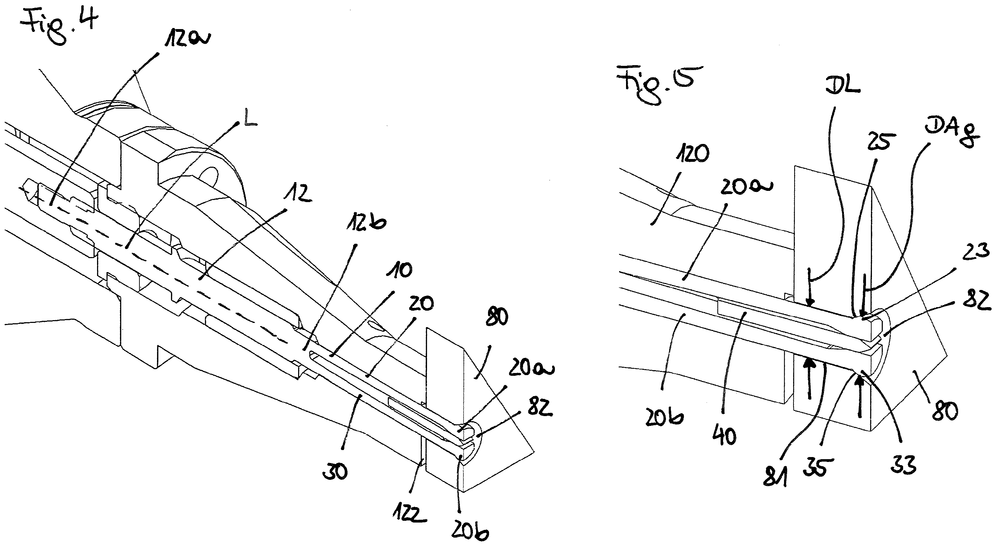

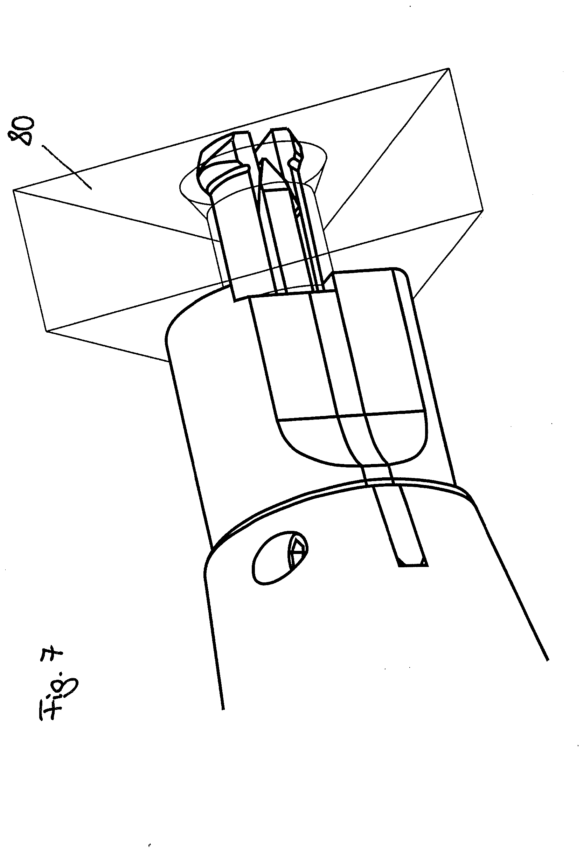

Die Figuren 1 bis 12 zeigen verschiedene Ansichten eines Ausführungsbeispiels eines Spreizdornspannsystems 100 zum spannenden Fixieren eines Werkzeugs oder Werkstücks 80 oder von Teilen davon, insbesondere einem Spannstößel 10.

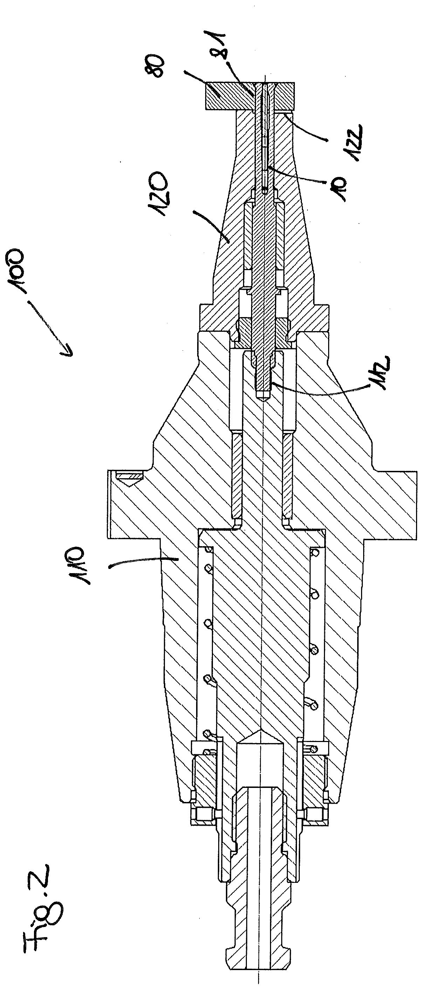

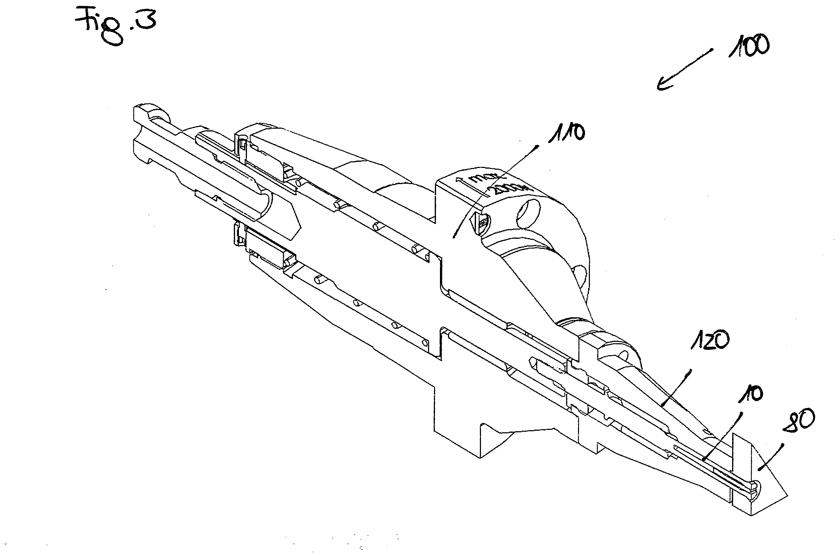

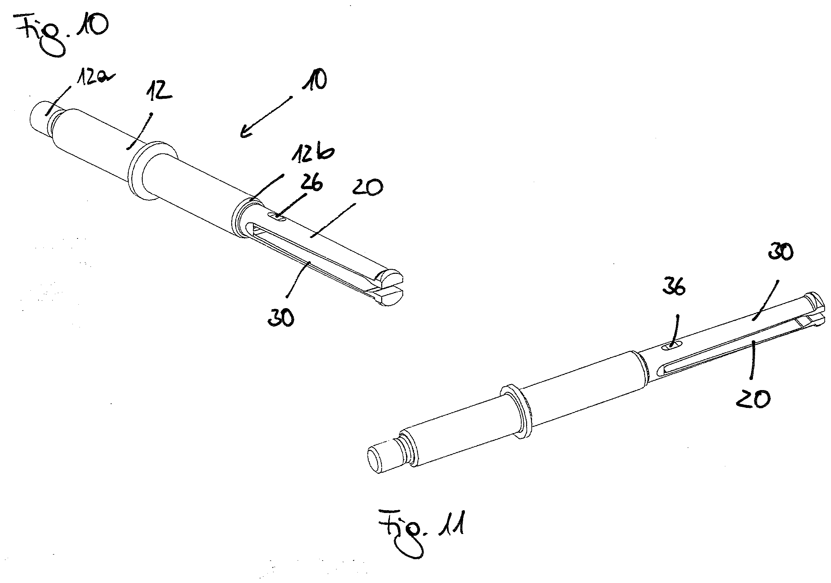

Der Spannstößel 10, der insbesondere in den Figuren 10 und 11 erkennbar ist, weist einen zylindrischen, langgestreckten Schaft 12 mit einer Längsachse L, einem ersten Ende 12a und einem zweiten Ende 12b auf. Das erste Ende 12a kann eine Schnittstelle zu einer Zugbefestigung 112, welche in einem Basisteil 110 des Spreizdornspannsystems 100 angeordnet sein kann, aufweisen (vgl. insbesondere Figuren 2 und 3), welche beispielsweise als Schraubverbindung, Spannzange oder Bajonettverschluss ausgebildet sein kann. An dem zweiten Ende 12b sind zwei Arme 20, 30 in Längsrichtung, also parallel zur Längsachse L, verlaufend und durch einen Spalt 14 beabstandet zueinander angeordnet. Jeder der Arme 20, 30 weist daher ein freies Ende 20a, 30b auf, welches an dem dem Schaft 12 abgewandten Ende des Armes 20, 30 angeordnet ist. Jeder der Arme 20, 30 weist weiterhin eine Innenfläche 21, 31, welche dem jeweils anderen Arm 30, 20 zugewandt ist, und eine Außenfläche 22, 32, welche dem jeweils anderen Arm 30, 20 abgewandt ist, auf. An jedem der Arme 20, 30 ist an dem freien Ende 20a, 30b auf der Außenseite 22, 32 eine radiale Verdickung 23, 33 angeordnet, welche gemeinsam nach Art eines Kopfs einer Schraube oder eines Nagels ausgebildet sein können. Die radiale Verdickung 23, 33 kann beispielsweise konisch, konvex oder auch zylinderförmig oder als Teil davon ausgeführt sein.

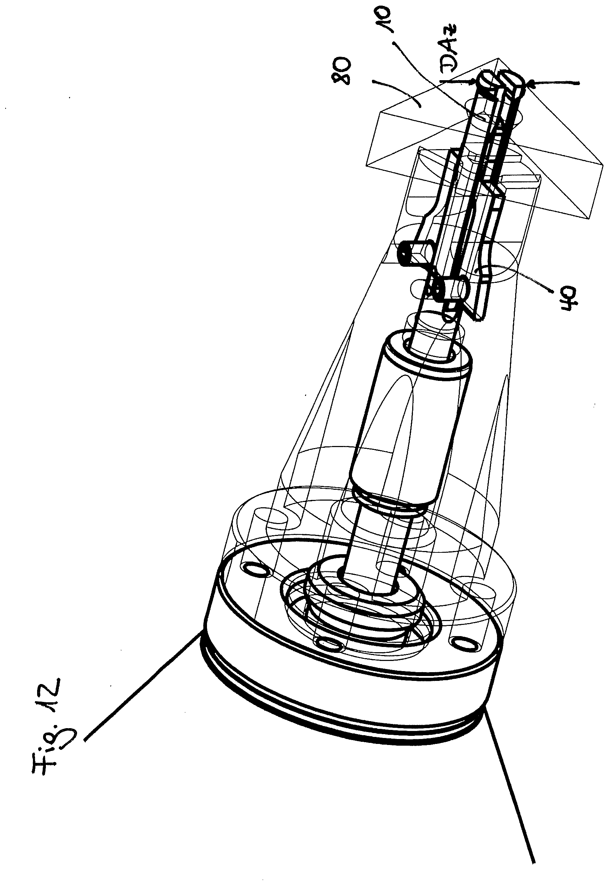

Zwischen den beiden Armen 20, 30 ist ein Keilblech 40 in Längsrichtung relativ zu den beiden Armen 20, 30 verschiebbar angeordnet, wobei in einer zurückgezogenen Position des Keilblechs 40 die Arme 20, 30 in einem zusammengedrückten Zustand (vgl. Figur 12) und in einer vorgeschobenen Position des Keilblechs 40 die Arme 20, 30 in einem gespreizten Zustand (vgl. insbesondere Figuren 2 und 5 bis 9) angeordnet sind. Das Keilblech 40 kann dabei lösbar angeordnet sein. Das Keilblech 40 kann feststehend angeordnet sein, wobei der Spannstößel 10 mittels der Zugbefestigung 112 parallel zu seiner Längsachse L zurückgezogen werden kann, um das Keilblech 40 in die vorgeschobene Position zu bringen, in welcher die Arme 20, 30 in dem gespreizten Zustand angeordnet sind.

Ein derartiger zweigeteilter Spannstößel 10 mit dem verschiebbaren Keilblech 40 wird auch als Spreizdorn bezeichnet.

Mit dem Spannstößel 10 kann ein ein Loch 81 aufweisendes Werkzeug oder Werkstück 80 an einer Werkzeug- oder Werkstückaufnahme 122 eines Wechselteils 120 des Spreizdornspannsystems befestigt werden. Das Loch 80 weist 81 einen minimalen Innendurchmesser DL auf, welcher durch den kleinsten Durchmesser des Lochs 80 gebildet ist. Der Spannstößel 10 und das Werkzeug oder Werkstück 80 sind dazu derart aufeinander abgestimmt, dass im zusammengedrückten Zustand die Arme 20, 30 im Bereich der Verdickungen 23, 33 einen Außendurchmesser DAz auf, welcher kleiner ist als der minimale Innendurchmesser DL, und dass im gespreizten Zustand die Arme 20, 30 im Bereich der Verdickungen 23, 33 einen Außendurchmesser Dag aufweisen, welcher größer ist als der minimale Innendurchmesser DL. Dadurch wird es ermöglicht, dass das Loch 80 über den Spannstößel 10 geführt werden kann, wenn sich der Spannstößel 10 im zusammengedrückten Zustand befindet. Anschließend wird der Spannstößel 10 in den gespreizten Zustand überführt, insbesondere durch Vorschieben des Keilblechs 40 in die vorgeschobene Position, so dass sich im Bereich der Verdickungen 23, 33 der Außendurchmesser vergrößert. Der Spannstößel 10 kann in dem Basisteil 110 über die Zugbefestigung 122 befestigt sein, wobei insbesondere durch Hineinziehen in die Werkzeug- oder Werkstückaufnahme 122 eine spannende Fixierung des Werkzeugs oder Werkstücks 80 erreicht werden kann, wobei insbesondere die Verdickungen 23, 33 an dem Werkzeug oder Werkstück 80, insbesondere einer Innenfläche einer Senkbohrung 82 des Lochs 81, anliegen.

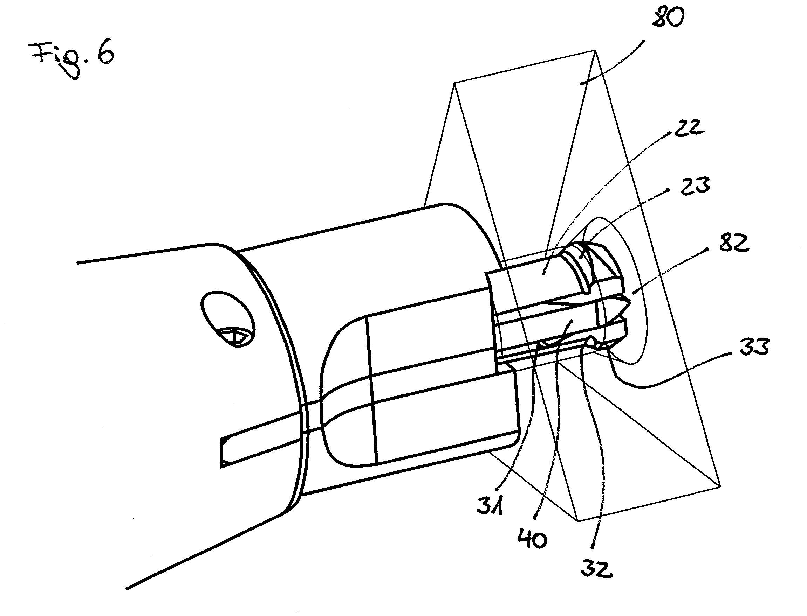

Jede der beiden radialen Verdickungen 23, 33 weist eine Anlagefläche 24, 34 auf, welche im gespreizten Zustand jeweils Teil einer um die Längsachse rotationssymmetrischen gedachten Fläche sind. Die radialen Verdickungen 23, 33 können sich beispielsweise zum freien Ende 20a, 30a der Arme 20, 30 hin zumindest über einen axialen Abschnitt 25, 35 konisch aufweiten. Wie beispielsweise in Figur 6 erkennbar, können die beiden Anlageflächen 24, 34 auf einer kegelförmigen rotationssymmetrischen Fläche liegen, die in Figur 6 im Wesentlichen einer Innenfläche der konischen Senkbohrung 82 entspricht. Dadurch kann eine zumindest linienförmige, bei Abstimmung der Neigungswinkel der Anlageflächen 24, 34 auf den Neigungswinkel der Senkbohrung 82 auch eine flächige Anlage, der beiden Anlageflächen 24, 34 an der Innenfläche des Lochs 81, insbesondere der Senkbohrung 82, erfolgen.

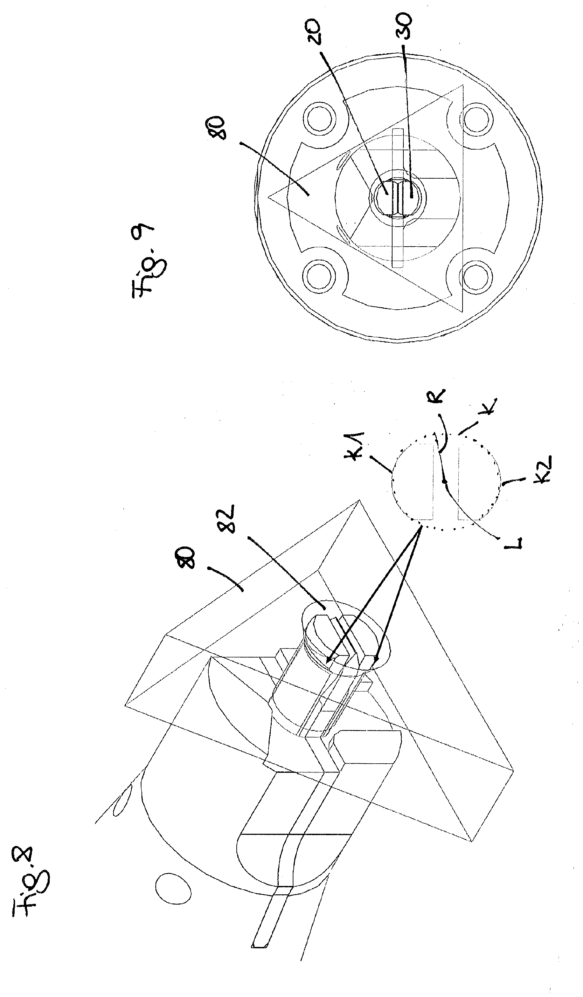

Jede der Außenflächen 22, 32 kann in wenigstens einem Querschnitt als Kreisbogenabschnitt K1, K2 mit einem Radius R ausgebildet sein, wobei im gespreizten Zustand die beiden Kreisbogenabschnitte K1, K2 auf einem gedachten Kreis K mit dem Radius R der Kreisbogenabschnitte K1, K2 dieses Querschnitts um die Längsachse L liegen (vgl. Fig. 8). Vorzugsweise gilt dies für jeden beliebigen Querschnitt zwischen dem freien Ende 20a, 30a der Arme 20, 30 und dem zweiten Ende 12b des Schafts 12

Der Spannstößel 10 ist üblicherweise aus Metall gefertigt.

Der Spannstößel 10 kann folgendermaßen hergestellt werden. Zunächst wird ein Spannstößelrohling bereitgestellt. Bei diesem handelt es sich typischerweise um einen rotationssymmetrischen Körper aus Vollmaterial. Der Spannstößelrohling wird insbesondere durch Rundschleifen oder eine Drehmaschinenbearbeitung derart bearbeitet, dass die Außenflächen der Arme 20, 30 einschließlich der Verdickungen 23, 33 entstehen. Dabei wird die äußere Kontur gebildet, die den Armen 20, 30 des Spannstößels 10 im gespreizten Zustand entspricht. Anschließend wird der Spalt 14 zwischen den Armen 20, 30 eingebracht, beispielsweise durch Drahterodieren oder durch ein materialabtragendes Verfahren wie Fräsen oder Wasserstrahlschneiden. Vorzugsweise erfolgt ein Härteprozess. Wird der Spalt 14 durch Drahterodieren eingebracht, erfolgt dies vorzugsweise nach dem Härten. Wird der Spalt 14 durch Fräsen oder Wasserstrahlschneiden eingebracht, erfolgt das Härten vorzugsweise nach dem Einbringen des Spalts 14 wischen den Armen 20, 30.

Schließlich werden die Arme 20, 30 in den zusammengedrückten Zustand überführt. Dies kann beispielsweise durch Pressen oder Stauchen erfolgen. Jeder der Arme 20, 30 kann dazu auf seiner Außenseite 22, 32 am dem freien Ende 20a, 30a abgewandten Ende eine Hilfsfläche 26, 36 aufweisen, welche beispielsweise strukturiert ausgebildet sein kann, und an welcher eine Vorrichtung zum Verformen der Arme 20, 30 angreifen kann.

### Bezugszeichenliste

- 10: Spannstößel
- 12: Schaft
- 12a: erstes Ende
- 12b: zweites Ende
- 14: Spalt
- 20: Arm
- 20a: freies Ende
- 21: Innenfläche
- 22: Außenfläche
- 23: Verdickung
- 24: Anlagefläche
- 25: axialer Abschnitt
- 26: Hilfsfläche
- 30: Arm
- 30a: freies Ende
- 31: Innenfläche
- 32: Außenfläche
- 33: Verdickung
- 34: Anlagefläche
- 35: axialer Abschnitt
- 36: Hilfsfläche
- 40: Keilblech
- 80: Werkzeug oder Werkstück
- 81: Loch
- 82: Senkbohrung
- 100: Spreizdornspannsystem
- 110: Basisteil
- 112: Zugbefestigung
- 120: Wechselteil
- 122: Werkzeug- oder Werkstückaufnahme
- L: Längsachse
- K1: Kreisbogenabschnitt
- K2: Kreisbogenabschnitt
- K: Kreis
- R: Radius
- DAz: Außendurchmesser
- DAg: Außendurchmesser
- DL: Innendurchmesser

## Patentansprüche

1. Spannstößel (10) mit einem Schaft (12) mit einer Längsachse (L), einem ersten Ende (12a) und einem zweiten Ende (12b), wobei an dem zweiten Ende (12b) zwei Arme (20, 30) in Längsrichtung verlaufend und durch einen Spalt (14) beabstandet zueinander angeordnet sind, wobei jeder der Arme (20, 30) eine Innenfläche (21, 31) und eine Außenfläche (22, 32) aufweist, und wobei an einem freien Ende (20a, 30a) der Arme (20, 30) jeweils auf der Außenfläche (22, 32) eine radiale Verdickung (23, 33) angeordnet ist, wobei zwischen den beiden Armen (20, 30) ein Keilblech (40) in Längsrichtung relativ zu den beiden Armen (20, 30) verschiebbar angeordnet ist, wobei in einer zurückgezogenen Position des Keilblechs (40) die Arme (20, 30) in einem zusammengedrückten Zustand und in einer vorgeschobenen Position des Keilblechs (40) die Arme (20, 30) in einem gespreizten Zustand angeordnet sind,
**dadurch gekennzeichnet, dass** jede der beiden radialen Verdickungen (23, 33) eine Anlagefläche (24, 34) aufweist, welche im gespreizten Zustand jeweils Teil einer um die Längsachse (L) rotationssymmetrischen gedachten Fläche sind.

2. Spannstößel nach einem der vorhergehenden Ansprüche,
**dadurch gekennzeichneet,** dass sich die radialen Verdickungen (23, 33) zum freien Ende (20a, 30a) der Arme (20, 30) hin zumindest über einen axialen Abschnitt (25, 35) konisch aufweiten.

3. Spannstößel nach einem der vorhergehenden Ansprüche,
**dadurch gekennzeichnet, dass** die Anlageflächen (24, 34) gewölbt ausgebildet sind.

4. Spannstößel nach einem der vorhergehenden Ansprüche,
**dadurch gekennzeichnet, dass** jede der Außenflächen (22, 32) in wenigstens einem Querschnitt als Kreisbogenabschnitt (K1, K2) mit einem Radius (R) ausgebildet ist, wobei im gespreizten Zustand die beiden Kreisbogenabschnitte (K1, K2) auf einem gedachten Kreis (K) mit dem Radius (R) der Kreisbogenabschnitte (K1, K2) dieses Querschnitts um die Längsachse (L) liegen.

5. Spannstößel nach einem der vorhergehenden Ansprüche,
**dadurch gekennzeichnet, dass** jede der Außenflächen (22, 32) in jedem beliebigen Querschnitt zwischen dem freien Ende (20a, 30a) der Arme (20, 30) und dem zweiten Ende (12b) des Schafts (12) als Kreisbogenabschnitt (K1, K2) mit einem Radius (R) ausgebildet ist, wobei im gespreizten Zustand die beiden Kreisbogenabschnitte (K1, K2) auf einem gedachten Kreis (K) mit dem Radius (R) der Kreisbogenabschnitte (K1, K2) dieses Querschnitts um die Längsachse (L) liegen.

6. Spannstößel nach einem der vorhergehenden Ansprüche,
**dadurch gekennzeichnet, dass** jeder der Arme (20, 30) auf seiner Außenseite (22, 32) am dem freien Ende (20a, 30a) abgewandten Ende eine Hilfsfläche (26, 36) aufweist.

7. Spannstößel nach einem der vorhergehenden Ansprüche,
**dadurch gekennzeichnet, dass** das Keilblech (40) lösbar angeordnet ist.

8. Set umfassend einen Spannstößel (10) nach einem der vorhergehenden Ansprüche und ein Werkzeug oder Werkstück (80) aufweisend ein Loch (81) mit einem minimalen Innendurchmesser (DL), wobei im zusammengedrückten Zustand die Arme (20, 30) im Bereich der Verdickungen (23, 33) einen Außendurchmesser (DAZ) aufweisen, welcher kleiner ist als der minimale Innendurchmesser (DL), und wobei im gespreizten Zustand die Arme (20, 30) im Bereich der Verdickungen (23, 33) einen Außendurchmesser (DAg) aufweisen, welcher größer ist als der minimale Innendurchmesser (DL).

9. Verfahren zum Herstellen eines Spannstößels (10) mit einem Schaft (12) mit einer Längsachse (L), einem ersten Ende (12a) und einem zweiten Ende (12b), wobei an dem zweiten Ende (12b) zwei Arme (20, 30) in Längsrichtung verlaufend und durch einen Spalt (14) beabstandet zueinander angeordnet sind, wobei jeder der Arme (20, 30) eine Innenfläche (21, 31) und eine Außenfläche (22, 32) aufweist, und wobei an einem freien Ende (20a, 30a) der Arme (20, 30) jeweils auf der Außenfläche (22, 32) eine radiale Verdickung (23, 33) angeordnet ist, wobei zwischen den beiden Armen (20, 30) ein Keilblech (40) in Längsrichtung verschiebbar angeordnet ist, wobei in einer zurückgezogenen Position des Keilblechs (40) die Arme (20, 30) in einem zusammengedrückten Zustand und in einer vorgeschobenen Position des Keilblechs (40) die Arme (20, 30) in einem gespreizten Zustand angeordnet sind, mit den Schritten:
- Bereitstellen eines Spannstößelrohlings,
- Herstellen der Außenfläche (22, 32) der Arme (20, 30) sowie der Verdickungen (23, 33) mit den Armen (20, 30) in gespreiztem Zustand,
- Einbringen des Spalts (14) zwischen den Armen (20, 30) und
- Überführen der Arme (20, 30) in den zusammengedrückten Zustand.

10. Verfahren nach Anspruch 9,
**dadurch gekennzeichnet, dass** das Überführen der Arme (20, 30) in den zusammengedrückten Zustand durch Pressen oder Stauchen erfolgt.

11. Verfahren nach einem der Ansprüche 9 bis 10,
**dadurch gekennzeichnet, dass** das Einbringen des Spalts (14) zwischen den Armen (20, 30) durch Drahterodieren oder durch ein materialabtragendes Verfahren wie Fräsen oder Wasserstrahlschneiden erfolgt.

12. Verfahren nach einem der Ansprüche 9 bis 11,
**dadurch gekennzeichnet, dass** die Arme (20, 30) gehärtet werden.
